# EUROPÄISCHE PATENTSCHRIFT

(11) **EP 0 949 164 B1**
(45) Veröffentlichungstag und Bekanntmachung des Hinweises auf die Patenterteilung: **19.12.2001**
(21) Anmeldenummer: 99101450.7
(22) Anmeldetag: 27.01.1999
(51) Int. Cl.: B65G 21/20, D01H 9/18, B65H 67/06

(54) **Transportsystem für Spinnspulen und Spulenhülsen mit einem einen Durchgang überbrückenden Transportweg**
Conveyor system for empty and full bobbins comprising a passage bridging transport path
Système de transport de bobines vides et pleines avec un chemin de transport enjambant un passage

(30) Priorität: 10.04.1998 DE 19816232
(43) Veröffentlichungstag der Anmeldung: 13.10.1999
(73) Patentinhaber: W. SCHLAFHORST AG & CO., 41061 Mönchengladbach (DE)
(72) Erfinder: Bertrams, Josef, 41844 Wegberg (DE); Reuters, Hans-Jakob, 41748 Viersen (DE); Brauer, Bernd, 41063 Mönchengladbach (DE); Spinnen, Dieter, 41179 Mönchengladbach (DE); Lörsch, Bernd, 52531 Übach-Palenberg (DE); Lindemann, Ute, 47877 Willich (DE)

(56) Entgegenhaltungen:
- WO-A-97/11015
- DE-A- 3 630 670
- DE-A- 4 011 797
- DE-A- 4 205 499
- GB-A- 2 075 268
- GB-A- 2 075 756
- US-A- 5 088 591

## Beschreibung

Die Erfindung betrifft ein Transportsystem für Spinnspulen und Spulenhülsen, die auf Paletten aufgesteckt sind, deren Fußteile ein Element aus magnetisierbarem Material enthalten, auf das Permanentmagnete während eines Transportes entlang eines einen Durchgang überbrückenden Transportweges einwirken, der zwei im wesentlichen vertikale Abschnitte und einen diese verbindenden, im wesentlichen horizontalen Abschnitt aufweist.

Bei einem Transportsystem der eingangs genannten Art (DE 40 11 797 A1) sind die scheibenartigen oder ringförmigen Fußteile mit einem Ring aus magnetisierbarem Material versehen, insbesondere mit einem Stahlring.
Diese Paletten werden üblicherweise auf horizontal verlaufende Transportbändern gefördert, auf denen sie mit ihrem Fußteil aufstehen. Um bei diesem Transportsystem einen Transport in vertikaler Richtung durchführen zu können, ist ein in vertikaler Richtung ausgerichteter, umlaufender Gurt vorgesehen, der in vorgegebenen Abständen mit paarweise angeordneten Permanentmagneten bestückt ist.
Die mittels eines Förderbandes heran transportierten Paletten werden seitlich gekippt und anschließend von den Magneten so übernommen, daß die Spinnspulen oder Spulenhülsen waagrecht ausgerichtet sind. Am oberen Ende des Gurtes werden die Paletten wieder zurückgekippt und von einem Transportband übernommen. Um am Ende eines Durchganges die Paletten wieder nach unten zu transportieren, wird ein zweiter Gurt vorgesehen, der ebenfalls mit Permanentmagneten vorgesehen ist, so daß der Vorgang in umgekehrter Reihenfolge wiederholt werden kann.

Es ist auch bekannt (DE 36 30 670 C2), Paletten auf einem Transportweg mit zwei im wesentlichen vertikalen Abschnitten und einem horizontalen Abschnitt mittels eines Transportbandes zu fördern.
Bei dieser Bauart ist das Transportband mit einem zusätzlichen bandförmigen Reibungsglied versehen. Die Paletten werden mittels an ihrer Oberseite angreifenden Führungsstegen so gegen das Reibungsglied angedrückt, daß eine für die Mitnahme ausreichende Friktionswirkung erhalten wird. Dabei gleiten die Oberseiten der Fußteile der Paletten an den Führungsstegen.

Des weiteren ist durch die WO 97/11 015 eine Anlage zum Bearbeiten und Transportieren von Gefäßen bekannt.
Die Gefäße, zum Beispiel Aerosoldosen oder dgl., sind dabei auf magnetisierbaren Paletten angeordnet.
Bei dieser bekannten Einrichtung sind entweder in einen umlaufenden Fördergurt Permanentmagnete eingearbeitet, die die magnetisierbaren Paletten direkt beaufschlagen, oder es sind unterhalb des Fördergurtes stationäre Magnetplatten angeordnet, die dafür sorgen, daß die magnetisierbaren Paletten gegen den umlaufenden Fördergurt gezogen und von diesem reibschlüssig mitgenommen werden.

Vergleichbare Transporteinrichtungen sind auch durch die GB 2 075 268 A oder die GB 2 075 756 A bekannt.

Die GB 2 075 268 A zeigt und beschreibt beispielsweise ein Förderersystem mit Streckenabschnitten, die in unterschiedlichen Transportebenen angeordnet sind Die einzelnen Streckenabschnitte weisen dabei jeweils zahlreiche Permanentmagnetpaare auf, die, in verschiedenen Anordnungen, unterhalb eines Fördergurtes festgelegt sind.
Die Anordnung der Permanentmagnetpaare konzentriert sich bei allen Anordnungen stets zur Förderbandmitte hin.

Bei der Transporteinrichtung gemäß GB 2 075 756 A sind zwei Permanentmagnetreihen vorgesehen, die jeweils durch Polplattenreihen eingeschlossen sind.
Das bedeutet, durch eine mittig angeordnete Polplattenreihe wird, in Verbindung mit entsprechenden äußeren Polplattenreihen, sowohl die Magnetkraft der in der linken Reihe angeordneten Permanentmagnete als auch die Magnetkraft der in der rechten Reihe angeordneten Permanentmagneten, gebündelt. Diese Bündelung erfolgt dabei genau im Bereich der Mittelachse der Transporteinrichtung.

Die vorbeschriebenen Transporteinrichtungen haben sich in der Praxis auf ihrem jeweiligen Anwendungsgebiet durchaus bewährt, sie sind jedoch ungeeignet, wenn Transportpaletten zum Einsatz kommen, die einen mittig angeordneten Informationsträger aufweisen.

Ausgehend vom vorgenannten Stand der Technik liegt der Erfindung daher die Aufgabe zugrunde, ein Transportsystem der eingangs genannten Art zu schaffen, das einfach aufgebaut ist und einen Verschleiß an den Paletten weitgehend vermeidet sowie die Verwendung von Paletten ermöglicht, die einen mittig angeordneten Informationsträger aufweisen.

Diese Aufgabe wird erfindungsgemäß dadurch gelöst, daß entlang des Transportweges wenigstens ein Transportband auf einer Gleitbahn läuft, dessen Rückseite stationär angeordnete, über die Abschnitte verteilte Permanentmagnete, die lotrecht zu der Gleitbahn magnetisiert sind, zugeordnet sind.
Die Permanentmagnetepaare liegen dabei nicht in den mittleren Bereichen der Fußteile der Paletten, sondern sind jeweils sowohl in Transportrichtung als auch quer zur Transportrichtung beabstandet montiert.
Die Permanentmagnete jeden Paares sind außerdem jeweils gegensinnig polarisiert.

Eine solche Ausbildung stellt sicher, daß die Magnetkräfte die Paletten zuverlässig an dem Transportband halten.
Das heißt, da die für einen Transport nach oben und nach unten zwischen dem Transportband und den Fußteilen der Paletten notwendigen Friktionskräfte von den Magnetkräften aufgebracht werden, gleiten die Paletten nicht, wie bislang üblich, an irgendwelchen Bauteilen entlang und sind daher keiner Abnutzung ausgesetzt.

Durch die lotrechte Anordnung der Permanentmagnete lassen sich außerdem die Magnetkräfte vollständig ausnutzen, wobei durch die gegensinnig Polarisiereung der Permanentmagnetpaare ein Magnetfeld gebildet wird, das nur durch die magnetisierbaren Elemente der Paletten läuft, während der Bereich in dem die Informationsträger angeordnet sind, ausgespart wird.
Das bedeutet, durch eine beabstandete Anordnung der Permanentmagnetpaare sowohl in Transportrichtung als auch quer zur Transportrichtung wird sichergestellt, daß in den mittleren Bereichen der Fußteile der Paletten keine magnetischen Magnetströme auftreten, die die in diesem Bereich laufenden Informationsträger der Paletten negativ beeinflussen können.

In vorteilhafter Ausgestaltung der Erfindung wird vorgesehen, daß das Transportband auf dem Transportweg auf einer Gleitbahn aus nicht magnetisierbarem Material geführt ist, auf deren dem Transportband abgewandten Seite die Permanentmagnete angeordnet sind. Die Gleitbahn stellt sicher, daß auch das Transportband nicht zu stark belastet und erhöhtem Verschleiß ausgesetzt ist.

Um die Magnetkräfte möglichst gut auszunutzen, wird weiter vorgesehen, daß die Permanentmagnete auf der der Gleitbahn abgewandten Seite mittels eines Joches aus magnetisierbarem Material miteinander verbunden sind. Zweckmäßigerweise wird dabei vorgesehen, daß das Joch als eine sich in Transportrichtung über eine Mehrzahl von Permanentmagneten erstreckende Schiene ausgebildet ist, die jeweils an einem Rahmen angebracht ist. Das Joch läßt sich somit in den für den Transportweg notwendigen Rahmen integrieren.

Zweckmäßiger Weise wird vorgesehen, daß die Paletten an ihrem Fußteil mit einem Ring aus magnetisierbarem Material umgeben sind, und daß das Transportband eine Breite aufweist, die geringer als der Durchmesser der Ringe ist. Diese Ringe erlauben eine sichere Krafteinleitung in die Paletten. Diese Krafteinleitung wird auch nicht durch das Transportband gestört, das eine geringere Breite aufweist, so daß die Magnetkräfte ungehindert von den Permanentmagneten zu den Ringen gelangen.

An der Aufnahmestelle müssen die Paletten umgelenkt nach oben beschleunigt werden, so daß dort die höchsten Transportkräfte gefordert werden. Aus diesem Grund wird in dem Berich einer Aufnahmestelle zu Beginn des ersten im wesentlichen vertikalen Abschnittes des Transportweges eine Zone stärkerer Magnetkräfte vorgesehen.

An der Abgabestelle werden geringere Magnetkräfte benötigt, insbesondere um das Ablösen relativ leicht durchführen zu können. Aus diesem Grund ist in den Bereich einer Abgabestelle des zweiten, im wesentlichen vertikalen Abschnittes des Transportweges eine Zone schwächerer Magnetkräfte vorgesehen.

Um sicherzustellen, daß an der Abgabestelle die Paletten in aufrechter Form abgegeben werden, wird zwischen der Abgabestelle des zweiten Abschnittes und einem daran unter einem Winkel von annähernd 90° anschließenden Transportelement eine Ablöseführung für die Paletten vorgesehen. Diese Ablöseführung sorgt dafür, daß die Paletten am Ende des zweiten Abschnittes in definierter Weise von dem Transportband gelöst werden, so daß sie in aufrechter Position an das anschließende Transportelement weitergegeben werden, das in den meisten Fällen ebenfalls ein Transportband sein wird.

Um einen Stau von Paletten im Bereich der Abgabestelle zu vermeiden, ist der zweite Abschnitt des Transportweges vor der Abgabestelle mit einer Vereinzelungseinrichtung versehen. Diese Vereinzelungseinrichtung, die im Prinzip beispielsweise aus der DE 42 05 499 A1 bekannt ist, sorgt dafür, daß die Paletten nicht unmittelbar aufeinanderfolgend an die Abgabestelle gelangen.

Um die Paletten zwischen den im wesentlichen vertikalen Abschnitten und dem horizontalen Abschnitt möglichst scharfwinklig umlenken zu können, wird vorgesehen, daß die Anordnung von Permanentmagneten im Bereich von Umlenkstellen unterbrochen ist und daß Umlenkrollen für das Transportband vorgesehen sind, die mit Permanentmagneten bestückt sind. Die mit dem Umlenkrollen rotierenden Permanentmagnete übernehmen in diesem Bereich das Halten der Paletten. Der Magnetfluß muß auch in diesem Bereich nicht durch das Transportband hindurchlaufen. Derartige, mit Permanentmagneten bestückte Umlenkrollen können vorteilhaft auch bei anderen brückenartigen Transportwegen eingesetzt werden, beispielsweise bei Transportwegen, deren vertikale oder annähernd vertikale Abschnitte und/oder horizontalen Abschnitte entsprechend dem Patent DE 36 30 670 ausgebildet sind.

In zweckmäßiger Ausgestaltung wird vorgesehen, daß die Permanentmagneten zwischen Scheiben aus magnetisierbarem Material angeordnet sind, die über den Umfang der Umlenkrolle überstehen und jeweils zu einem Vieleck abgeflacht sind. Aufgrund dieser Vieleck-Form lassen sich scharfwinklige Umlenkungen der Paletten realisieren, obwohl der Durchmesser der Umlenkrollen relativ klein gehalten wird.

Weitere Merkmale und Vorteile der Erfindung ergeben sich aus der nachfolgenden Beschreibung der in der Zeichnung dargestellten Ausführungsbeispiele.
- Fig. 1: zeigt in schematischer Darstellung eine Seitenansicht eines Transportweges in der Form einer über einen Durchgang geführten Brücke,
- Fig. 2: einen Schnitt entlang der Linie II-II der Fig. 1,
- Fig. 3: einen Schnitt entlang der Linie III-III der Fig. 1 durch eine Umlenkrolle,
- Fig. 4: eine Ansicht in Richtung des Pfeiles IV der Fig. 3,
- Fig. 5: eine Ansicht in Richtung des Pfeiles V der Fig. 1 auf eine Magnetanordnung im Bereich der Aufnahmestelle,
- Fig. 6: eine Ansicht in Richtung des Pfeiles VI der Fig. 1 auf eine Magnetanordnung im Bereich der Abgabestelle,
- Fig. 7: eine Ansicht in Richtung des Pfeiles VII der Fig. 1 auf eine Vereinzelungseinrichtung und
- Fig. 8: eine Teilansicht von der Seite her auf den Bereich der Abgabestelle.

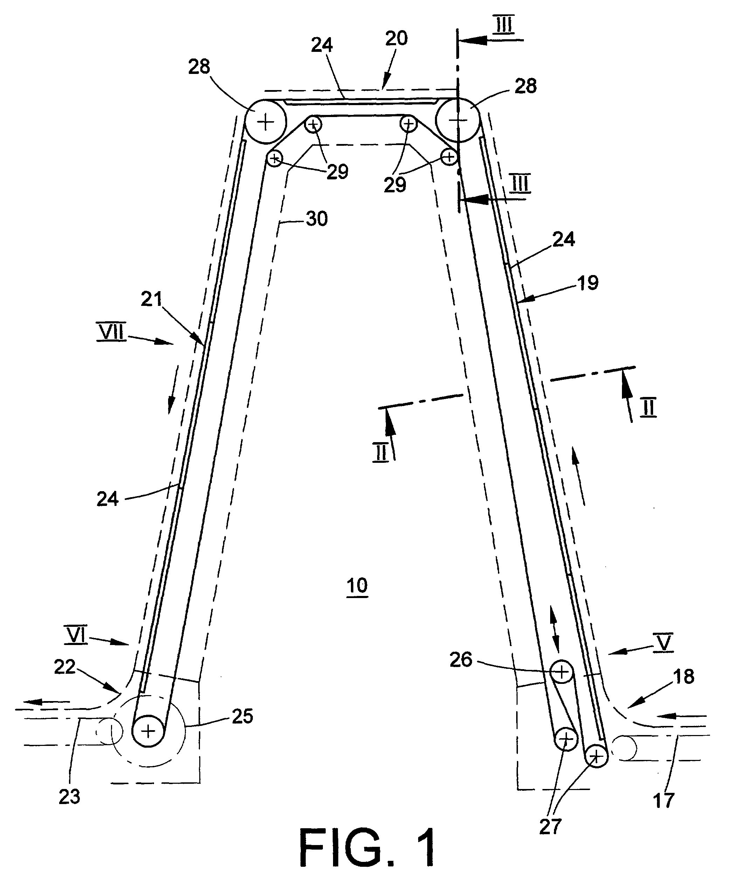

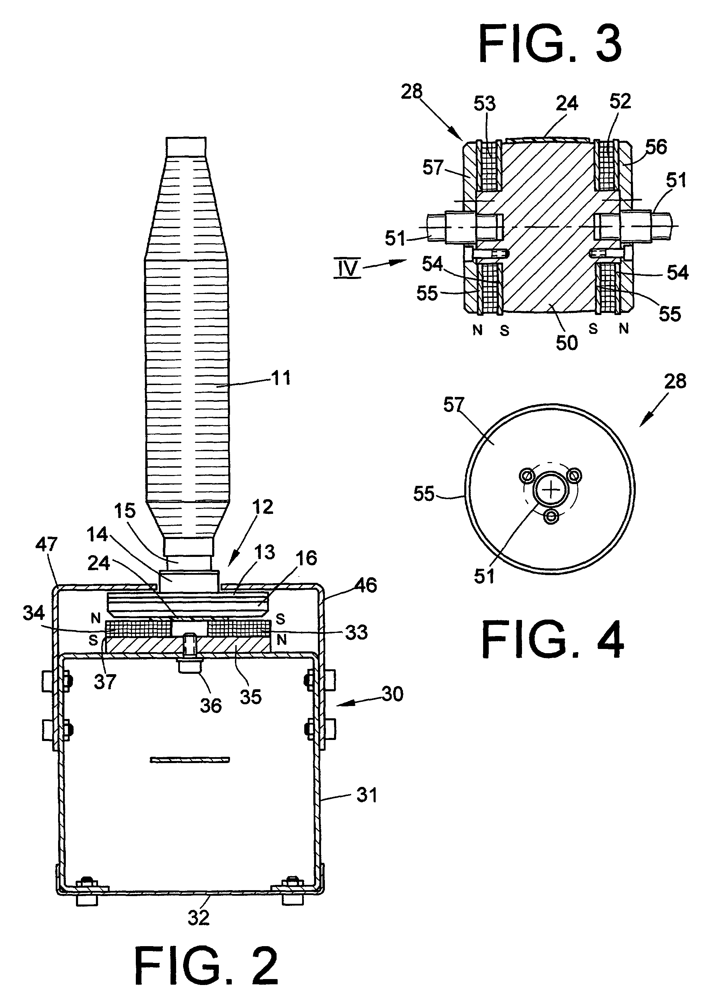

Der in Fig. 1 dargestelle Transportweg bildet eine Brücke, eine sogenannte Kopsbrücke, die einen Durchgang 10 zwischen zwei aufeinanderfolgenden Maschinen überbrückt. Beispielsweise kann diese Kopsbrücke in einem Transportsystem zwischen einer Spulmaschine und einer Ringspinnmaschine oder zwischen einer Spulmaschine und einer Beladevorrichtung angeordnet sein. In diesem Transportsystem werden Spinnspulen 11 (Fig. 2) und Spulenhülsen transportiert, die jeweils auf eine Palette 12 aufgesteckt sind. Die Palette 12 besitzt ein Fußteil 13, das als Ring oder Scheibe ausgebildet ist und das zentrisch mit einem Hals 14 versehen ist. An diesem Hals schließt ein in Durchmesser abgesetzter Zapfen 15 an, auf den die Spinnspule 11 oder auch eine leere Spulenhülse aufgesteckt sind. Der Fußteil 13 ist mit einem Ring 16 aus magnetisierbarem Stahl eingefaßt.

Die Paletten 12 mit den Spinnspulen 11 oder Spulenhülsen werden mittels eines horizontal verlaufenden Zuführtransportbandes 17 zugeführt und gelangen an einer Aufnahmestelle 18 zu einem ersten, leicht zur Vertikalen geneigten Abschnitt 19 des brückenartigen Transportweges. An diesen ersten Abschnitt 19 schließt ein horizontaler Abschnitt 20 an, auf den ein ebenfalls leicht zur Vertikalen geneigter, wieder nach unten führenden Abschnitt 21 folgt. Am unteren Ende des Abschnittes 21 werden die Paletten 12 an einer Abgabestelle 22 an ein in horizontaler Richtung weiterlaufendes Abtransportband 23 abgegeben.

In der Praxis werden die Paletten 12 in der Art einer geschlossenen Schleife transportiert, von welcher auf einem Strang Paletten mit Spulenhülsen und auf einem anderen Strang Paletten mit Spinnspulen 11 transportiert werden. In diesem Fall sind zwei spiegelbildlich zueinander fördernde, in der Ansicht in Fig. 1 hintereinander angeordnete brückenartige Transportwege vorgesehen.

Der brückenartige Transportweg enthält ein über die Abschnitte 19, 20, 21 endlos umlaufendes Transportband 24. Das Transportband ist im Bereich der Abgabestelle 22 mit einem Antrieb 25 versehen, der nur angedeutet ist. Im Bereich der Aufnahmestelle 18 ist für das Transportband 24 eine Spanneinrichtung mit einer Spannrolle 26 vorgesehen, die das Transportband zwischen zwei Umlenkrollen 27 spannt. Zwischen den Abschnitten 19, 20 und 20, 21 ist jeweils eine Umlenkrolle 28 angeordnet, deren Ausbildung später noch im einzelnen anhand von Fig. 3 und 4 erläutert werden wird. Das rücklaufende Trum des Transportbandes 24 ist im Bereich der Umlenkrollen 28 über Rollen 29 geführt.

Der brückenartige Transportweg besitzt einen portalförmigen Rahmen 30, der in Fig. 1 gestrichelt angedeutet ist. Wie aus Fig. 2 zu sehen ist, ist der Rahmen im wesentlichen aus einem gekanteten Blechprofil 31 gebildet, das einen im wesentlichen U-förmigen Querschnitt aufweist und dessen offene Seite mit einer Blechabdeckung 32 verschlossen ist. Das Blechprofil 31 besteht aus einem nicht magnetisierbarem Material, z.B. Aluminium. Wie aus Fig. 2 zu ersehen ist, liegt das rücklaufende Trum des Transportbandes innerhalb des Rahmens 30, während das ziehende Trum des Transportes 24 außerhalb des Rahmens läuft.

Um die Paletten 12 in den im wesentlichen vertikalen Abschnitten 19 und 21 sicher mit dem Transportband 24 transportieren zu können, ist eine Permanentmagnetanordnung vorgesehen, die die Paletten 12 an dem Transportband 24 hält und auch ein Kippen oder Abfallen der Paletten 12 verhindert.

Wie aus Fig. 2, 5 und 6 zu ersehen ist, sind auf der Rückseite des Transportbandes Permanentmagnete 33, 34 jeweils in Paaren angeordnet, die quer zur Transportrichtung und auch in Transportrichtung jeweils in Abstand zueinander angeordnet sind. Die Permanentmagneten sind auf ihrer dem Transportband 24 abgewandten Seite mit einem Joch 35 verbunden, das sich schienenartig in Transportrichtung erstreckt und das an der Außenseite des Blechprofils 31 mittels Schrauben 36 befestigt ist. In Richtung zu dem Transportband 24 sind die Permanentmagnete 33, 34 mit einem Blech 37 abgedeckt, das aus einem hochlegierten, nicht magnetisierbarem Stahlblech besteht. Die Permanentmagnete 33, 34 sind mit dem Joch 35 und dem Blech 37 verklebt. Das Joch 35 mit den Magneten 33, 34 und dem Blech 37 ist in Sektionen gestaltet, die so aneinander angereiht werden, daß sie sich über den Bereich von der Aufnahmestelle 18 bis zur Umlenkrolle 28 sowie von dem Bereich der gegenüberliegenden Umlenkrolle 28 bis zu der Abgabestelle 22 erstrecken. In dem horizontalen Abschnitt 20 kann eine entsprechende Sektion mit Permanentmagneten 33, 34 vorgesehen werden. Da in diesem Abschnitt 20 die Paletten jedoch bereits aufgrund ihres Eigengewichtes mit ausreichender Kraft auf dem Transportband 24 aufstehen, kann hier auch ein Führungsblech ohne Permanentmagnete vorgesehen werden. Die aneinandergereiten Sektionen bilden mit ihren Blechen 37 eine Gleitbahn, auf der die Innenseite des Transportbandes 24 gleitet.

Die als flache rechteckige Körper aus Hartferrit hergestellten Permanentmagneten 33, 34 sind lotrecht zu der Ebene des Transportbandes 24 polarisiert. Dabei sind die Permanentmagnete 33, 34 paarweise so ausgerichtet, daß sie jeweils gegensinnig zueinander polarisiert sind. Wie aus Fig. 2 zu ersehen ist, hat das Transportband 24 eine Breite, die etwa der Hälfte der Breite der Außenabstände der Paare von Permanentmagneten 33, 34 entspricht. Der Ring 16 aus Stahl der Paletten 12 hat einen Durchmesser, der in etwa dem Außenabstand der Permanentmagnete 33, 34 entspricht. Aufgrund dieser Ausbildung ergibt sich ein guter Magnetfluß von den Permanentmagneten 33, 34 zu dem Ring 16. Das Transportband 24, das mit einer oder mehreren Gewebeeinlagen versehen ist, besitzt eine relativ geringe Dicke, die in der Größenordnung von 2 mm oder weniger liegt, so daß auch durch die Banddicke der Magnetfluß nicht wesentlich gestört ist.

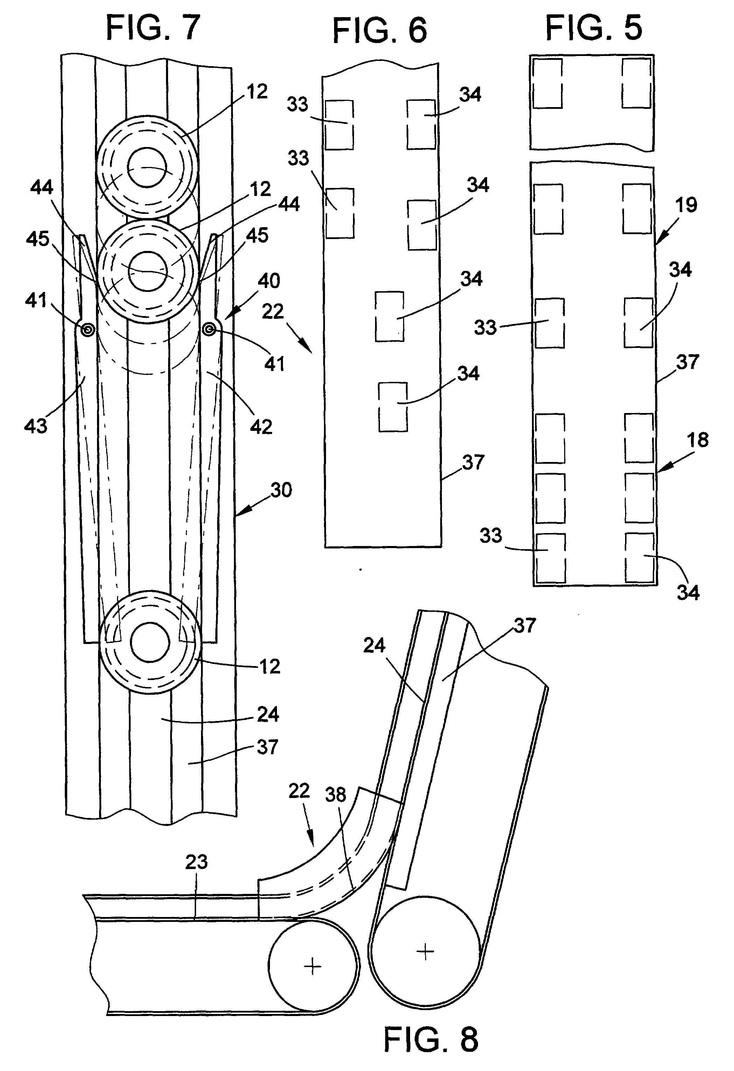

Im Bereich der Aufnahmestelle 18 werden die Paletten 12 um etwa 90° umgelenkt, wobei die von ihnen aufgenommenen Spinnspulen 11 oder Spulenhülsen aus einer vertikalen Position in einer annähernd horizontale Position gelangen. Damit dieser Bewegungsablauf sicher erfolgt und die Paletten sicher an dem Transportband 24 anlangen, ist es zweckmäßig, wenn in dem Bereich der Aufnahmestelle 18 relativ hohe Magnetkräfte zwischen den Paletten 12 und den Permanentmagneten 33, 34 wirken. Dieser relativ hohen Kräfte, die beispielsweise in der Größenordnung von 27 N betragen, werden bei dem Ausführungsbeispiel dadurch erzielt, daß in dem Bereich der Aufnahmestelle 18 die Permanentmagnete 33, 34 in dichter Folge angeordnet sind. Nach dieser Aufnahmestelle 18 reichen für einen sicheren Transport der Paletten 12 geringere Magnetkräfte aus, so daß es ausreicht, die gleich großen und gleich starken Permanentmagnete 33, 34 paarweise in größerem Abstand anzuordnen, beispielsweise in einem Abstand in der Größenordnung von 60 cm. Ferner ist es zweckmäßig, wenn im Bereich der Abgabestelle 22 die Magnetkräfte reduziert sind, so daß dadurch ein Ablösen der Paletten 12 von dem Transportband 24 und die Übergabe an das anschließende Transportband 23 erleichtert werden. Wie in Fig. 6 dargestellt ist, wird aus diesem Grund im Bereich der Abgabestelle 22 mittels der dort vorhandenen Anzahl von Permanentmagneten 33, 34 die Magnetkraft reduziert. Im Bereich der Abgabestelle 22 werden anstelle einer paarweisen Anordnung von Permanentmagneten 33, 34 nur einzelne Permanentmagnete 34 vorgesehen, die zusätzlich von dem Bereich des Randes etwas näher an die Mitte herangerückt werden.

Um die Abgabe der Paletten im Bereich der Abgabestelle 22 zu erleichtern, ist ferner im Bereich der Abgabestelle eine Ablöseführung 38 vorgesehen, die bestimmt, daß die Paletten 12 entlang einer gerundeten Führungsbahn von dem Transportband 24 zu dem Transportband 23 gelangen. Bei dem Ausführungsbeispiel nach Fig. 8 besteht die Ablöseführung aus einem entsprechend gerundeten Blech, das im Bereich des Transportbandes 24 gabelartig ausgespart ist und sich mit zwei Zinken neben dem Transportband 24 an das dort befindliche Gleitblech 37 anlegt. Die Ablöseführung 38 ist in nicht näher dargestellter Weise an dem Rahmen 30 einstellbar befestigt.

Im Bereich der Aufnahmestelle 18 kann eine ähnliche Führung vorgesehen werden, obwohl dies jedoch nicht unbedingt notwendig ist.

Wie in Fig. 7 dargestellt ist, ist im Bereich des Abschnittes 21 vor der Abgabestelle 22 eine Vereinzelungseinrichtung 40 vorgesehen, die dafür sorgt, daß die Paletten einzeln und in einem vorgegebenen Abstand zu der Abgabestelle 22 gelangen und von dort weiter transportiert werden. Diese Vereinzelungsvorrichtung 40, die im Prinzip der Vereinzelungsvorrichtung nach der DE 42 05 499 A1 entspricht, weist zwei um lotrecht zu dem Transportband 24 verlaufende Achsen 41 verschwenkbare Hebel 42, 43 auf. Die Hebel 42, 43 besitzen den Fußteil der Paletten 12 zugeordnete Führungsflächen. Die spiegelsymmetrisch zum Transportband 24 angeordneten Führungsflächen der Hebel 42, 43 besitzen Einlaufschrägen 44, die bis zu Kanten 45 reichen, die in der in Fig. 7 mit ausgezogenen Linien dargestellten Stellung eine Sperre bilden, d.h. einen Abstand quer zum Transportband aufweisen, der geringer ist als der Durchmesser des Fußteils einer Palette 12.

Um eine Palette 12 passieren zu lassen, müssen die Hebel 42, 43 stromaufwärts von den Achsen 41 von dem Fußteil einer Palette 12 nach außen geschwenkt werden, wie dies mit strichpunktierten Linien dargestellt ist. In Transportrichtung nach den Schwenkachsen 41 verlaufen die Führungskanten der Hebel 42, 43 geradlinig und in der mit ausgezeichneten Linien dargestellten Position parallel zueinander. In dieser Position halten sie einen Abstand ein, der mit geringem Spiel dem Durchmesser des Fußteils einer Palette 12 entspricht. Die beiden Hebel 42, 43 stützen sich somit gegen das Fußteil einer Palette 12 außen ab, solange sich eine Palette in ihrem Bereich befindet. Dadurch wird verhindert, daß die Hebel stromauf von den Achsen 41 nach außen geschwenkt werden können. Damit bilden die Ecken 45 eine die nachfolgende Palette zurückhaltende Sperre, die erst dann gelöst wird, wenn die vorausgegangene Palette 12 den Bereich der Hebel 42, 43 verlassen hat.

Die Paletten sind in dem Bereich der Abschnitte 19, 20, 21 sowie im Bereich der Bänder 17, 18 mittels Führungsblechen gesichert, die so angeordnet sind, daß sie lotrecht zu den jeweiligen Transportbändern 17, 23, 24 einen Abstand einhalten, der größer als die Dicke des Fußteils ist, und zwischen sich einen Schlitz belassen, der breiter als der Hals 14 einer Palette ist. Diese Führungsbleche dienen zur Sicherung der Paletten gegen ein Kippen und Herunterfallen, ohne jedoch eine sonstige Führungsaufgabe zu haben. Wie aus Fig. 2 zu ersehen ist, sind derartige Führungsbleche 46, 47 die im Bereich des Rahmens 30 wenigstens aus nicht magnetisierbarem Material bestehen, an dem Rahmen 30 mittels Schrauben befestigt.

Wie aus Fig. 1 zu ersehen ist, sind die Magnetführungen in dem Übergang zwischen dem Abschnitt 19 und dem Abschnitt 20 und in dem Übergang zwischen dem Abschnitt 20 und dem Abschnitt 21 unterbrochen. In diesen Übergängen sind Umlenkrollen 28 angeordnet, die in Fig. 3 und 4 näher dargestellt sind. Die Umlenkrollen bestehen aus einem Rollenkörper 50 aus nicht magnetisierbarem Material, beispielsweise aus Aluminium. In diesen Rollenkörper 50 sind Achsbolzen 51 eingesetzt, mit denen die Umlenkrollen 28 in nicht näher dargestellter Weise mittels Wälzlagern in den Rahmen 30 gelagert sind. Der Rollenkörper 50 ist seitlich mit zwei Ringmagneten 52, 53 versehen, die in einem Abstand angeordnet sind, der größer als die Breite des Transportbandes 24 ist. Die beiden Ringmagnete 52, 53 sind axial polarisiert und derart angeordnet, daß ihre Polarisierung jeweils gegensinnig ist. Die Ringmagnete 52, 53 sind jeweils zwischen Ringscheiben 54, 55 aus magnetisierbarem Material angeordnet, insbesondere aus Stahl. Außen sind Deckscheiben 56, 57 angebracht, die mittels Schrauben an dem Rollenkörper 50 befestigt sind.

Die Ringscheiben 54, 55 stehen nach außen über den Umfang des Rollenkörpers 50 über, wobei dieser Überstand in der Größenordnung der Stärke des Transportbandes 24 liegt. Die Ringscheiben 54, 55 sind mittels Abflachungen zu einem Vieleck gestaltet. Aufgrund der Vieleckform ist es möglich, Umlenkrollen 28 mit relativ kleinem Durchmesser vorzusehen und dennoch die Paletten sicher um den entsprechend kleinen Radius umzulenken.

Wie aus Fig. 5 und 6 sowie Fig. 3 zu ersehen ist, sind die Permanentmagnete 33, 34 und die Magnetringe 52, 53 so angeordnet, daß sie nicht in den mittleren Bereich des Fußteils der Paletten 12 liegen. Der Magnetfluß führt deshalb nicht zu einer Störung eines in der Mitte des Fußteils einer Palette 12 anbringbaren Chips, der mit Informationen codiert sein kann.

## Patentansprüche

1. Transportsystem für Spinnspulen (11) und Spulenhülsen, die auf Paletten (12) aufgesteckt sind, deren Fußteile (13) ein Element (16) aus magnetisierbarem Material enthalten, auf das Permanentmagnete (33, 34; 52, 53) während eines Transportes entlang eines einen Durchgang (10) überbrückenden Transportweges einwirken, der zwei im wesentlichen vertikale Abschnitte (19, 21) und einen diese verbindenden im wesentlichen horizontalen Abschnitt (20) aufweist,
**dadurch gekennzeichnet,**
**daß** entlang des Transportweges wenigstens ein Transportband (24) auf einer Gleitbahn (37) läuft, dessen Rückseite stationär angeordnete, über die Abschnitte (19, 21) verteilte Permanentmagnete (33, 34) zugeordnet sind, deren Magnetkräfte die Paletten (12) an dem Transportband (24) halten, wobei
die Permanentmagnete (33, 34) lotrecht zur Gleitbahn (37) magnetisiert sind, und
die Permanentmagnete (33, 34) sowohl in Transportrichtung als auch quer zur Transportrichtung beabstandet angeordnet sind, so dass sie nicht in den mittleren Bereichen der Fußteile der Paletten (12) liegen, und daß die Permanentmagnete jedes Paares gegensinnig polarisiert sind.

2. Transportsystem nach Anspruch 1, **dadurch gekennzeichnet, daß** die Gleitbahn (37) aus nicht magnetisierbarem Material ist, auf deren dem Transportband (24) abgewandten Seite die Permanentmagnete (33, 34) angeordnet sind.

3. Transportsystem nach Anspruch 1 und 2, **dadurch gekennzeichnet, daß** die Permanentmagnete (33, 34) auf der der Gleitbahn (37) abgewandten Seite mittels eines Joches (35) aus magnetisierbarem Material miteinander verbunden sind.

4. Transportsystem nach Anspruch 3, **dadurch gekennzeichnet, daß** das Joch (35) als eine sich in Transportrichtung über eine Mehrzahl von Permanentmagneten (33, 34) erstreckende Schiene ausgebildet ist, die jeweils an einem Rahmen angebracht sind.

5. Transportsystem nach Anspruch 1, **dadurch gekennzeichnet, daß** die Paletten (12) an ihrem Fußteil (13) mit einem Ring (16) aus magnetisierbarem Material umgeben sind und daß das Transportband (24) eine Breite aufweist, die geringer als der Durchmesser der Ringe (16) ist.

6. Transportsystem nach einem der vorherigen Ansprüche, **dadurch gekennzeichnet, daß** in dem Bereich einer Aufnahmestelle (18) zu Beginn des ersten, im wesentlichen vertikalen Abschnittes (19) des Transportweges eine Zone stärkerer Magnetkräfte vorgesehen ist.

7. Transportsystem nach einem der vorherigen Ansprüche, **dadurch gekennzeichnet, daß** in dem Bereich einer Abgabestelle (22) des zweiten, im wesentlichen vertikalen Abschnittes (21) des Transportweges eine Zone schwächerer Magnetkräfte vorgesehen ist.

8. Transportsystem nach einem der vorherigen Ansprüche, **dadurch gekennzeichnet, daß** zwischen einer Abgabestelle (22) und einem daran unter einem Winkel von annähernd 90° anschließenden Transportelement (23) eine Ablöseführung (38) für die Paletten (12) vorgesehen ist.

9. Transportsystem nach einem der vorherigen Ansprüche, **dadurch gekennzeichnet, daß** der zweite vertikale Abschnitt (21) des Transportweges vor der Abgabestelle (22) mit einer Vereinzelungseinrichtung (40) versehen ist.

10. Transportsystem nach Anspruch 1, **dadurch gekennzeichnet, daß** im Bereich von Umlenkstellen zwischen den im wesentlichen vertikalen Abschnitten (19, 21) und dem im wesentlichen horizontalen Abschnitt (20) des Transportweges Umlenkrollen (28) für das Transportband (24) vorgesehen sind, die mit Permanentmagneten (52, 53) bestückt sind.

11. Transportsystem nach Anspruch 10, **dadurch gekennzeichnet, daß** die Umlenkrollen (28) im wesentlichen aus nicht magnetisierbarem Material bestehen und mit ringförmigen Permanentmagneten (52, 53) versehen sind, die beidseits der Breite des Transportbandes (24) angeordnet sind.

12. Transportsystem nach Anspruch 11, **dadurch gekennzeichnet, daß** die ringförmigen Permanentmagneten (52, 53) axialpolarisiert sind.

13. Transportsystem nach Anspruch 12, **dadurch gekennzeichnet, daß** die beiden ringförmigen Permanentmagneten (52, 53) gegensinnig polarisiert sind.

14. Transportsystem nach einem der Ansprüche 10-13, **dadurch gekennzeichnet, daß** die Permanentmagneten (52, 53) zwischen Scheiben (54, 55) aus magnetisierbarem Material angeordnet sind, die über den Umfang des Körpers (50) der Umlenkrolle überstehen und jeweils zu einem Vieleck abgeflacht sind.

## Claims

1. Conveyor system for spinning bobbins (11) and spinning tubes which are placed on pallets (12), the foot parts (13) of which contain an element (16) made of magnetisable material, on which permanent magnets (33, 34; 52, 53) act during a conveyance along a conveying path bridging a through-passage (10), which conveying path has two substantially vertical portions (19, 21) and a substantially horizontal portion (20) connecting these, **characterised in that**, along the conveying path, at least one conveyor belt runs on a guideway (37), stationarily arranged permanent magnets (33, 34) which are distributed over the portions (19, 21) and the magnetic forces of which hold the pallets (12) on the conveyor belt (24) being associated with the back of the conveyor belt, wherein the permanent magnets (33, 34) are magnetised perpendicularly to the guideway (37) and the permanent magnets (33, 34) are arranged so as to be spaced apart both in the conveying direction and transverse to the conveying direction, so they are not located in the central regions of the foot parts of the pallets (12), **in that** the permanent magnets of each pair are polarised in opposite directions.

2. Conveyor system according to claim 1, **characterised in that** the guideway (37), on the side of which remote from the conveyor belt (24) the permanent magnets (33, 34) are arranged, is made of non-magnetisable material.

3. Conveyor system according to claim 1 and 2, **characterised in that** the permanent magnets (33, 34) are connected to one another on the side remote from the guideway (37) by means of a yoke (35) made of magnetisable material.

4. Conveyor system according to claim 3, **characterised in that** the yoke (35) is designed as a rail extending in the conveying direction via a plurality of permanent magnets (33, 34) which are each attached to a frame.

5. Conveyor system according to claim 1, **characterised in that** the pallets (12) are surrounded by a ring (16) made of magnetisable material at their foot part (13) and **in that** the conveyor belt (24) has a width which is less than the diameter of the rings (16).

6. Conveyor system according to any one of the preceding claims, **characterised in that** a zone of stronger magnetic forces is provided in the region of a receiving position (18) at the beginning of the first, substantially vertical portion (19) of the conveying path.

7. Conveyor system according to any one of the preceding claims, **characterised in that** a zone of weaker magnetic forces is provided in the region of a delivery point (22) of the second, substantially vertical portion (21) of the conveying path.

8. Conveyor system according to any one of the preceding claims, **characterised in that** a detachment guide (38) is provided for the pallets (12) between a delivery point (22) and a conveyor element (23) adjacent thereto at an angle of approximately 90°.

9. Conveyor system according to any one of the preceding claims, **characterised in that** the second vertical portion (21) of the conveying path is provided before the delivery point (22) with a separating device (40).

10. Conveyor system according to claim 1, **characterised in that**, in the region of deflection points between the substantially vertical portions (19, 21) and the substantially horizontal portion (20) of the conveying path, guide rollers (28) equipped with permanent magnets (52, 53) are provided for the conveyor belt (24).

11. Conveyor system according to claim 10, **characterised in that** the guide rollers (28) substantially consist of non-magnetisable material and are provided with annular permanent magnets (52, 53) which are arranged on either side of the width of the conveyor belt (24).

12. Conveyor system according to claim 11, **characterised in that** the annular permanent magnets (52, 53) are axially polarised.

13. Conveyor system according to claim 12, **characterised in that** the two annular permanent magnets (52, 53) are polarised in opposite directions.

14. Conveyor system according to any one of claims 10 to 13, **characterised in that** the permanent magnets (52, 53) are arranged between discs (54, 55) made of magnetisable material, which project beyond the periphery of the body (50) of the guide roller and are each flattened into a polygon.

## Revendications

1. Système de transport pour des bobines (11) et des douilles de bobines, qui sont placées sur des palettes (12), dont les parties de pied (13) contiennent un élément (16) à base de matériau magnétisable, sur lequel des aimants permanents (33, 34; 52, 53) agissent pendant un transport le long d'un chemin de transport enjambant un passage (10), lequel chemin présente deux parties (19, 21) sensiblement verticales et une partie (20) sensiblement horizontale et reliant ces parties, **caractérisé en ce qu'**au moins une bande transporteuse (24) circule le long du chemin de transport sur une glissière (37), à l'arrière de laquelle sont affectés des aimants permanents (33, 34) disposés de façon stationnaire et répartis sur les portions (19, 21), aimants dont les forces magnétiques (12) maintiennent les palettes (12) sur la bande transporteuse (24), moyennant quoi les aimants permanents (33, 34) sont magnétisés perpendiculairement à la glissière (37), et les aimants permanents (33, 34) sont disposés de façon espacée aussi bien dans le sens de transport que transversalement au sens de transport, de sorte qu'ils ne se trouvent pas dans les zones moyennes des parties de pied des palettes (12), et que les aimants permanents de chaque paire sont polarisés dans le sens contraire.

2. Système de transport selon la revendication 1, **caractérisé en ce que** la glissière (37) est à base de matériau non magnétisable, sur le côté, opposé à la bande transporteuse (24), de laquelle les aimants permanents (33, 34) sont disposés.

3. Système de transport selon la revendication 1 et 2, **caractérisé en ce que** les aimants permanents (33, 34) sont reliés entre eux sur le côté opposé à la glissière (37) au moyen d'une culasse (35) à base de matériau magnétisable.

4. Système de transport selon la revendication 3, **caractérisé en ce que** la culasse (35) est conçue comme un rail qui s'étend dans le sens de transport au moyen d'un grand nombre d'aimants permanents (33, 34), qui sont logés respectivement sur un cadre.

5. Système de transport selon la revendication 1, **caractérisé en ce que** les palettes (12) sont entourées sur leur partie de pied (13) d'une bague (16) à base de matériau magnétisable et **en ce que** la bande transporteuse (24) présente une largeur qui est inférieure au diamètre des bagues (16).

6. Système de transport selon l'une quelconque des revendications précédentes, **caractérisé en ce qu'**une zone de forces magnétiques plus élevées est prévue dans la zone d'un endroit de réception (18) au début de la première portion (19), sensiblement verticale, du chemin de transport.

7. Système de transport selon l'une quelconque des revendications précédentes, **caractérisé en ce qu'**une zone de forces magnétiques plus faibles est prévue dans la zone d'un endroit de distribution (22) de la deuxième portion (21), sensiblement verticale, du chemin de transport.

8. Système de transport selon l'une quelconque des revendications précédentes, **caractérisé en ce qu'**un guide de séparation (38) pour les palettes (12) est prévu entre un endroit de distribution (22) et un élément de transport (23) s'y raccordant en formant un angle d'environ 90°.

9. Système de transport selon l'une quelconque des revendications précédentes, **caractérisé en ce que** la deuxième portion (21) verticale du chemin de transport est dotée d'un système de séparation (40) avant l'endroit de distribution (22).

10. Système de transport selon la revendication 1, **caractérisé en ce que**, dans la zone de points de déviation entre les portions (19, 21) sensiblement verticales et la portion (20) sensiblement horizontale du chemin de transport, il est prévu des galets inverseurs (28) pour la bande transporteuse (24) qui sont équipés d'aimants permanents (52, 53).

11. Système de transport selon la revendication 10, **caractérisé en ce que** les galets inverseurs (28) sont principalement à base de matériau non magnétisable et sont pourvus d'aimants permanents (52, 53) de forme annulaire qui sont disposés des deux côtés de la largeur de la bande transporteuse (24).

12. Système de transport selon la revendication 11, **caractérisé en ce que** les aimants permanents (52, 53) de forme annulaire sont polarisés dans le sens axial.

13. Système de transport selon la revendication 12, **caractérisé en ce que** les deux aimants permanents (52, 53) de forme annulaire sont polarisés en sens contraire.

14. Système de transport selon l'une quelconque des revendications 10 à 13, **caractérisé en ce que** les aimants permanents (52, 53) sont disposés entre des disques (54, 55) à base de matériau magnétisable qui débordent de la périphérie du corps (50) du galet inverseur et sont aplatis respectivement en formant un polygone.
